# EUROPÄISCHE PATENTSCHRIFT

(11) **EP 2 580 032 B1**
(45) Veröffentlichungstag und Bekanntmachung des Hinweises auf die Patenterteilung: **04.05.2016**
(21) Anmeldenummer: 11725629.7
(22) Anmeldetag: 03.06.2011
(51) Int. Cl.: B26D 3/28, B26D 7/01

(54) **WERKZEUG ZUM NACHSCHNEIDEN VON WISCHERBLÄTTERN**
TOOL FOR RE-CUTTING WIPER BLADES
OUTIL PERMETTANT DE RECOUPER DES RACLETTES D'ESSUIE-GLACE

(30) Priorität: 11.06.2010 DE 202010007855 U
(43) Veröffentlichungstag der Anmeldung: 17.04.2013
(73) Patentinhaber: Kronberg, Mario, 76437 Rastatt (DE); Alibegovic, Adnan, 67930 Beinheim (FR)
(72) Erfinder: Kronberg, Mario, 76437 Rastatt (DE); Alibegovic, Adnan, 67930 Beinheim (FR)
(74) Vertreter: Lemcke, Brommer & Partner Patentanwälte Partnerschaft mbB
(86) Internationale Anmeldenummer: PCT/EP2011/002733
(87) Internationale Veröffentlichungsnummer: WO 2011/154113

(56) Entgegenhaltungen:
- WO-A1-2004/028761
- DE-A1- 3 120 679
- DE-A1- 3 509 786
- DE-A1- 3 510 738
- DE-U1-202004 019 683

## Beschreibung

Die Erfindung betrifft ein Werkzeug zum Nachschneiden abgenutzter Wischerblätter für Scheibenwischer, wobei die Wischerblätter ausgehend von ihrem scheibenseitigen Rand einen zunehmenden Querschnitt und darin beidseits zumindest eine Längsnut aufweisen und diese Längsnuten mit vorzugsweise beidseitigen Führungsleisten eines Führungsschlitzes des Werkzeuges korrespondieren, derart, dass das Wischerblatt in definierter Höhe in Längsrichtung durch den Führungsschlitz des Werkzeuges durchziehbar ist, wobei in dem Führungsschlitz ein Messer angeordnet ist, dass den verschlissenen Rand des Wischerblattes beim Durchziehen durch das Werkzeug abschält.

Neue Wischerblätter haben an ihrem der Scheibe zugewandten Rand scharfe Kanten. Diese Kanten nützen sich im Laufe der Benutzungszeit ab und es entsteht ein Radius. Auch kann es an den Kanten zu lokalen Ausbrüchen des Wischergummis kommen. Beides führt dazu, dass der Scheibenwischer seine Wischkraft verliert und die Scheibe nicht mehr wasserfrei abgezogen wird.

Ein Werkzeug mit den eingangs genannten Merkmalen ist durch die DE 20 2004 019 683 bekannt. Dabei ist das Messer ortsfest im Werkzeug angeordnet.

Darüber hinaus ist es durch die DE 102 43 690 bekannt, bei einem gleichartigen Werkzeug zum Nachschneiden von Wischerblättern das Messer in einer Schneideinheit zu lagern und diese Schneideinheit höhenverstellbar im Werkzeug anzuordnen, so dass das Schnittniveau verändert werden kann. Dadurch ist das Werkzeug für Wischerlippen mit unterschiedlicher Höhe geeignet. Allerdings verteuert der Verstellmechanismus das Werkzeug ganz erheblich. Darüber hinaus wird die Handhabung erschwert, weil es relativ aufwendig ist, die zur Wischerlippe passende Schnitttiefe zu identifizieren und einzustellen.

Hiervon ausgehend liegt der vorliegenden Erfindung die Aufgabe zugrunde, das bekannte Schneidwerkzeug dahingehend zu verbessern, dass es für Wischerblätter mit unterschiedlicher Profilgeometrie, insbesondere unterschiedlicher Höhe, verwendbar ist. Dabei soll sich das erfindungsgemäße Werkzeug durch günstige Herstellungskosten und unproblematische Bedienbarkeit auszeichnen.

Diese Aufgabe wird ausgehend von dem bekannten Werkzeug gemäß der DE 20 2004 019 683 erfindungsgemäß dadurch gelöst, dass das Werkzeug zumindest zwei Führungsschlitze aufweist und dass dabei der Abstand zwischen ihren Führungsleisten einerseits und dem zugeordneten Messer andererseits unterschiedlich ist.

Die Erfindung beruht auf der Erkenntnis, dass viele Wischerblätter unterschiedliches Profil haben und nicht nur einmal, sondern mehrfach nachgeschnitten werden können. Dies wird durch das erfindungsgemäße Werkzeug möglich, weil es mehrere Führungsschlitze mit unterschiedlicher Arbeitstiefe bzw. Schnitthöhe anbietet.

Außerdem beruht die Erfindung auf der Erkenntnis, dass unterschiedliche Wischerblätter auf dem Markt sind und deshalb auch unterschiedliche Werkzeuge zum Nachschneiden erforderlich sind. Durch die erfindungsgemäße Kombination mehrerer Führungsschlitze in ein und demselben Werkzeug bietet sich der Vorteil, dass Wischerblätter unterschiedlicher Geometrie mit dem gleichen Werkzeug behandelt werden können, ohne dass der Benutzer gezwungen ist, Einstellarbeiten am Werkzeug durchzuführen.

Zur Realisierung der erfindungsgemäßen Lösung wäre es prinzipiell möglich, für jeden Führungsschlitz ein eigenes Messer in der gewünschten Schnitthöhe vorzusehen. Fertigungstechnisch bedeutend günstiger wird es jedoch, wenn gemäß einer Weiterbildung der Erfindung ein gemeinsames Messer für mehrere Führungsschlitze vorgesehen wird. Dieses Messer kann bezogen auf das Niveau der Führungsschlitze abgestuft oder mit Gefälle quer zu den Führungsschlitzen verlaufen, um so die unterschiedlichen Schnitttiefen zu erreichen. Stattdessen ist es aber auch möglich, die Führungsleisten der jeweiligen Führungsschlitze auf unterschiedlicher Höhe bezüglich der Messerposition anzuordnen.

Zweckmäßig werden mehrere Führungsschlitze benachbart nebeneinander im Werkzeug angeordnet, und zwar jeweils mit ihren Führungsleisten oberhalb des Messers. Alternativ oder zusätzlich können jedoch auch weitere Führungsschlitze mit Führungsleisten unterhalb des Messers, also auf der gegenüberliegenden Werkzeugseite angeordnet werden.

Das Messer ist wie im bekannten Fall austauschbar im Werkzeug angeordnet. Besonders zweckmäßig ist es jedoch, wenn das Messer darüber hinaus auch in Längsrichtung verstellbar und arretierbar ist. Dadurch können nach einer gewissen Anwendungsdauer unverbrauchte Messerbereiche in die Führungsschlitze hineingeschoben werden. Die Lebensdauer des Messers wird dadurch erheblich verlängert, weil ein Großteil des Messers im inaktiven Bereich zwischen zwei Führungsschlitzen verläuft, wogegen im Führungsschlitz selbst nur ein recht kleiner Messerbereich wirksam wird.

Zu diesem Zweck kann das oder die Messer auf einem gemeinsamen Träger montiert sein, der etwa quer zu den Führungsschlitzen im Werkzeug gelagert ist und in unterschiedlichen Positionen durch Rast- oder Schnappverbindungen im Werkzeug gehalten wird.

Eine besonders zweckmäßige Weiterbildung der Erfindung besteht darin, dass das zumindest eine Messer mit einem Gefälle relativ zur Längsrichtung der Führungsschlitze angeordnet ist, derart, dass seine Schneidkante höher in den Führungsschlitz hineinragt als der Messerrücken. Dadurch reibt der frisch geschnittene untere Rand des Wischerblattes nicht mehr an dem Messer entlang und das Durchziehen des Wischerblattes durch das Werkzeug wird erleichtert.

Zu dem gleichen Zweck empfiehlt es sich, dass die Führungsschlitze zumindest hinter dem bzw. den Messer(n) eine deutlich größere Tiefe aufweisen, als es dem unbeschnittenen Wischerblatt entspricht, weil dadurch die Abfuhr des abgeschälten verschlissenen Randes unterhalb des Messers erleichtert wird. Insbesondere können die Führungsschlitze hinter dem bzw. den Messer(n) an ihrem unteren Ende offen sein.

Damit der Benutzer nicht herumprobieren muss, welcher der verschiedenen Führungsschlitze zu dem nachzuschneidenden Wischerblatt passt, besteht eine zweckmäßige Weiterbildung der Erfindung darin, dass die Führungsschlitze eine von außen gut erkennbare Markierung aufweisen, die das zugehörige Messerniveau, also die Schnitttiefe anzeigt. Dadurch kann das Messer mehr oder weniger unsichtbar im mittleren Bereich des Führungsschlitzes, also nach einer gewissen Einführlänge des Wischerblattes positioniert werden und der Benutzer braucht sich bei der Auswahl des passenden Führungsschlitzes nur an der Markierung - zweckmäßig ein Querstrich auf dem Schnittniveau - zu orientieren.

Weitere Merkmale und Vorteile der Erfindung ergeben sich aus den Unteransprüchen und der Beschreibung eines Ausführungsbeispieles und aus der Zeichnung; dabei zeigt:
- Figur 1: ein schematisches Schrägbild des Werkzeuges;
- Figur 2: einen Schnitt durch das Werkzeug entlang einem Führungsschlitz mit eingeschobenem Wischerblatt;
- Figur 3: das aus dem Werkzeug entnommene Messer mit seiner Halterung von oben gesehen.

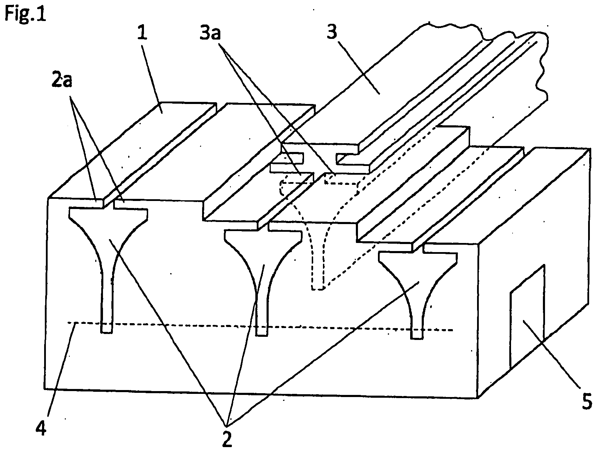

Wie man vor allem aus dem Schrägbild gemäß Figur 1 erkennt, besteht das Werkzeug aus einem Grundkörper 1, der drei nebeneinander angeordnete, nach oben offene Führungsschlitze 2 aufweist. Der Grundkörper 1 hat im Ausführungsbeispiel die Form eines ziegelförmigen Klotzes, stattdessen kommt aber auch jede andere Form in Betracht. Die drei Führungsschlitze 2 weisen wie im bekannten Fall an ihrem oberen Ende jeweils zwei aufeinander zulaufende Führungsleisten 2a auf, unterhalb derer sich der Schlitz verbreitert. Insgesamt entspricht die Kontur des Führungsschlitzes etwa dem mittleren und unteren Bereich eines Wischerblattes, wie dies durch das im mittleren Führungsschlitz 2 steckende Wischerblatt 3 deutlich wird.

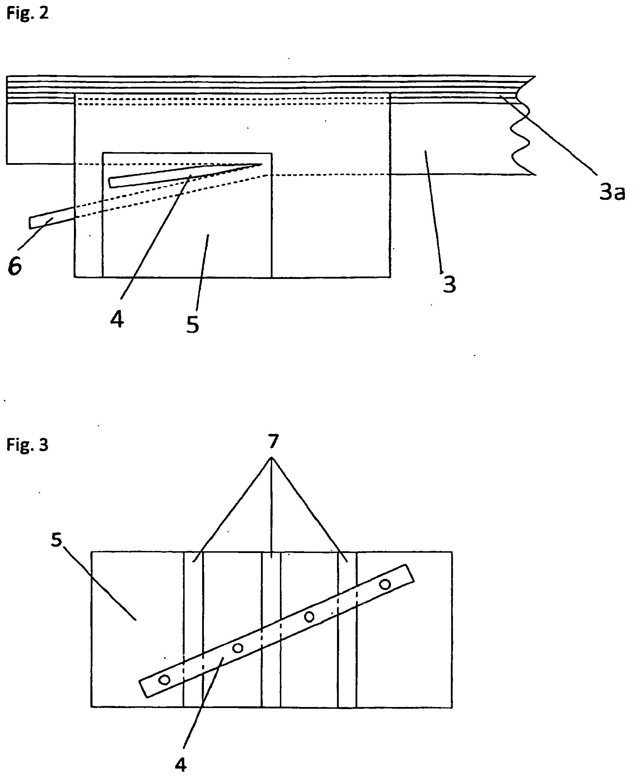

Nahe dem unteren Ende der Führungsschlitze 2 werden sie von einem gemeinsamen, horizontal durchlaufenden Messer 4 durchquert, das in Figur 1 durch eine gestrichelte Linie symbolisiert ist, tatsächlich aber innerhalb des Werkzeuges angeordnet ist, wie Figur 2 zeigt. Vorzugsweise wird als Messer eine Rasierklinge verwendet.

Wesentlich ist nun, dass die Führungsschlitze, insbesondere ihre Führungsleisten 2a, die mit entsprechenden Längsnuten 3a des Wischerblattes 3 korrespondieren, unterschiedlich weit von dem Messer 4 beabstandet sind. Deutlich wird dies durch die abgetreppte Oberseite des Werkzeuges 1, die dafür sorgt, dass der linke Führungsschlitz am höchsten, der mittlere Führungsschlitz in einer tieferen Position und der rechte Führungsschlitz auf dem untersten Niveau verläuft. Der linke Führungsschlitz kommt also beispielsweise für ein langes Wischerblatt in Frage, das zum ersten Mal nachgeschnitten wird, während der mittlere oder rechte Führungsschlitz für ein kürzeres oder schon mehrfach nachgeschnittenes Wischerblatt passt.

Figur 2 zeigt den eigentlichen Schneidvorgang. Dabei ist ein Wischerblatt 3 mit seinem linken Ende in einen passenden Führungsschlitz 2 von rechts eingeschoben worden, also in einen solchen Führungsschlitz, bei dem das Niveau des Messers 4 höher liegt als der verschlissene untere Rand des Wischerblattes. Das Wischerblatt wird dabei in Längsrichtung durch die Führungsleisten 2a, die beidseits in entsprechende Wischerblattnuten 3a eingreifen, geführt. Durch die der Wischerblatt-Kontur angepasste Form des Führungsschlitzes ist sichergestellt, dass das Wischerblatt in seinem unteren Bereich ebenfalls eine gewisse Führung hat und nicht in Querrichtung ausweichen kann, und zwar vor allem dort, wo das Nachschneiden erfolgt. Wie man sieht, wird dabei der untere Rand 6 des Wischerblattes durch das Messer 4 abgeschält.

Das Abschneiden und Abschälen des verschlissenen unteren Randes 6 wird dadurch begünstigt, dass das Messer 4 in Relation zur Durchschubrichtung des Wischerblattes mit Gefälle in das Werkzeug 1 eingebaut ist, derart, dass seine Schneidkante höher liegt, also weiter in den Führungsschlitz hineinragt, als der Messerrücken.

Wie Figur 2 außerdem zeigt, ist das sämtliche Führungsschlitze durchquerende Messer 4 auf einem Träger 5 montiert, und zwar vorzugsweise über Langlöcher, damit es in Längsrichtung verstellbar ist. Der Messerträger 5 durchquert das Werkzeug 1 und ist zumindest an der einen Seite des Werkzeuges mit samt dem Messer herausziehbar. Die Arretierung des Messerträgers 5 im Werkzeug 1 kann durch eine Rastverbindung oder Schrauben etc. erfolgen. Stattdessen kann aber auch der Messerträger selbst im Werkzeug quer zu den Längsschlitzen verstellbar und arretierbar angeordnet sein.

Figur 3 zeigt den Messerträger 5, insbesondere dessen Ausbildung im unteren Bereich der Führungsschlitze 2. Man sieht, dass der Messerträger dort jeweils unterhalb des Messers 4 eine Aussparung 7 aufweist. Diese Aussparung ist notwendig, damit der abgeschälte untere Rand 6 den Messerträger 5 passieren kann und zusammen mit dem Wischerblatt 3 durch den Führungsschlitz 2 hindurchgeschoben werden kann. Die Aussparung 7 kann durch das ganze Werkzeug 1 vertikal hindurchlaufen, also unten offen sein. Ihre Breite kann größer als in Figur 3 dargestellt bemessen sein, wenn der Messerträger 5 quer zu den Führungsschlitzen verstellbar im Werkzeug 1 angeordnet ist, wenn man also unverbrauchte Bereiche des Messers 4 in die Führungsschlitze hinein schieben will.

Schließlich zeigt Figur 3, dass das Messer 4 nicht genau senkrecht zu den Führungsschlitzen, sondern schräg unter einem Winkel von etwa 30° verläuft. Dadurch wird der Schneidvorgang begünstigt.

## Patentansprüche

1. Werkzeug zum Nachschneiden abgenutzter Wischerblätter (3) für Scheibenwischer, wobei die Wischerblätter (3) ausgehend von ihrem scheibenseitigen Rand einen zunehmenden Querschnitt und darin beidseits zumindest eine Längsnut (3a) aufweisen und diese Längsnuten (3a) mit mindestens einer Führungsleiste (2a) eines Führungsschlitzes (2) des Werkzeuges korrespondieren, derart, dass das Wischerblatt (3) in definierter Höhe in Längsrichtung durch den Führungsschlitz (2) des Werkzeuges durchziehbar ist, wobei in dem Führungsschlitz (2) ein Messer (4) angeordnet ist, das den verschlissenen Rand (6) des Wischerblattes (3) beim Durchziehen durch das Werkzeug abschält,
**dadurch gekennzeichnet,**
**dass** das Werkzeug (1) zumindest zwei Führungsschlitze (2) aufweist, bei denen der Abstand zwischen deren Führungsleisten (2a) einerseits und dem bzw. den zugeordneten Messer(n) (4) andererseits unterschiedlich ist und dass der unterschiedliche Abstand zwischen den Führungsleisten (2a) und dem bzw. den zugeordneten Messer(n) (4) ohne Einstellarbeiten am Werkzeug vorhanden ist.

2. Werkzeug nach Anspruch 1,
**dadurch gekennzeichnet,**
**dass** ein gemeinsames Messer (4) für mehrere Führungsschlitze (2) vorgesehen ist.

3. Werkzeug nach Anspruch 1,
**dadurch gekennzeichnet,**
**dass** die Führungsleisten (2a) bezogen auf das Niveau des zumindest einen Messers (4) auf unterschiedlicher Höhe angeordnet sind.

4. Werkzeug nach Anspruch 1,
**dadurch gekennzeichnet,**
**dass** mehrere Führungsschlitze (2) nebeneinander angeordnet sind.

5. Werkzeug nach Anspruch 1,
**dadurch gekennzeichnet,**
**dass** Führungsschlitze (2) unterhalb und/oder oberhalb des zumindest einen Messers (4) angeordnet sind.

6. Werkzeug nach Anspruch 1,
**dadurch gekennzeichnet,**
**dass** das zumindest eine Messer (4) in seiner Längsrichtung verstellbar gelagert ist.

7. Werkzeug nach Anspruch 1,
**dadurch gekennzeichnet,**
**dass** das Messer (4) in verschiedenen Längspositionen im Werkzeug arretierbar ist.

8. Werkzeug nach Anspruch 1,
**dadurch gekennzeichnet,**
**dass** das zumindest eine Messer (4) auf einem Träger (5) montiert ist, der mit samt dem bzw. den Messern (4) aus dem Werkzeug (1) entnehmbar ist.

9. Werkzeug nach Anspruch 1,
**dadurch gekennzeichnet,**
**dass** der Messerträger (5) in einer Schiebeführung etwa quer zu den Führungsschlitzen (2) in dem Werkzeug gelagert ist.

10. Werkzeug nach Anspruch 7,
**dadurch gekennzeichnet,**
**dass** der Messerträger (5) durch eine Rast- oder Schnappverbindung im Werkzeug (1) gehalten ist.

11. Werkzeug nach Anspruch 1,
**dadurch gekennzeichnet,**
**dass** das zumindest eine Messer (4) mit einem Gefälle relativ zur Längsrichtung der Führungsschlitze (2) angeordnet ist, derart, dass seine Schneidkante höher in den Führungsschlitz (2) hineinragt als der Messerrücken.

12. Werkzeug nach Anspruch 1,
**dadurch gekennzeichnet,**
**dass** die Führungsschlitze (2) zumindest hinter dem bzw. den Messer(n) (4) eine größere Tiefe aufweisen als es dem Wischerblatt entspricht.

13. Werkzeug nach Anspruch 1,
**dadurch gekennzeichnet,**
**dass** an einem Ende der Führungsschlitze (2) eine Markierung angeordnet ist, welche die zu dem jeweiligen Führungsschlitz (2) gehörige Schnittiefe anzeigt.

## Claims

1. Tool for trimming worn wiper blades (3) for windscreen wipers, wherein starting from the edge on their windscreen side the wiper blades (3) exhibit an increasing cross-section with at least one longitudinal groove (3a) provided on both sides therein and these longitudinal grooves (3a) corresponding with at least one guide bar (2a) of a guide slit (2) of the tool in such a way that the wiper blade (3) can be longitudinally pulled though the guide slit (2) of the tool at a defined height, wherein arranged within the guide slit (2) is a blade (4) which trims off the worn edge (6) of the wiper blade (3) as it is pulled though the tool
**characterised in that**
the tool (1) has at least two guide slits (2) in the case of which the distance between their guide bars (2a) on the one hand and the assigned blade(s) (4) on the other hand is different, and **in that** the different distance between the guide bars (2a) and the assigned blade(s) (4) is present without adjustment work on the tool.

2. Tool according to claim 1
**characterised in that**
one common blade (4) is provided for several guide slits (2).

3. Tool according to claim 1
**characterised in that**
the guide bars (2a) are arranged at different height in relation to the level of the at least one blade (4).

4. Tool according to claim 1
**characterised in that**
several guide slits (2) are arranged next to each other.

5. Tool according to claim 1
**characterised in that**
guide slit (2) are arranged beneath and/or above the at least one blade (4).

6. Tool according to claim 1
**characterised in that** the at least one blade (4) can be adjusted in its longitudinal direction.

7. Tool according to claim 1
**characterised in that**
the blade (4) can be stopped in various longitudinal positions in the tool.

8. Tool according to claim 1
**characterised in that**
the at least one blade (4) is mounted on a holder (5) which can be removed from the tool (1) together with the blade(s) (4).

9. Tool according to claim 1
**characterised in that**
the blade holder (5) is arranged in a push guide approximately perpendicular to the guide slits (2) in the tool.

10. Tool according to claim 7
**characterised in that**
the blade holder (5) is held in the tool (1) by means of an interlocking or snap-type connection.

11. Tool according to claim 1
**characterised in that**
the at least one blade (4) is arranged at an inclination relative to the longitudinal direction of the guide slits (2) in such a way that its cutting edge projects higher into the guide slit (2) than the back of the blade.

12. Tool according to claim 1
**characterised in that**
at least behind the blade(s) (4) the guide slits (2) have a greater depth than that which corresponds to the wiper blade.

13. Tool according to claim 1
**characterised in that**
on one end of the guide slits (2) are a marking is arranged which indicates the cutting depth of the relevant guide slit (2).

## Revendications

1. Outil pour recouper des balais d'essuie-glace (3) usés, les balais d'essuie-glace (3) ayant une section transversale croissante à partir de leur bord côté vitre et ayant des deux côtés au moins une rainure longitudinale (3a) et ces rainures longitudinales (3a) correspondant à au moins une baguette de guidage (2a) d'une fente de guidage (2) de l'outil de telle sorte que le balai d'essuie-glace (3) peut être tiré à une hauteur définie, dans le sens de la longueur, à travers la fente de guidage (2) de l'outil, une lame (4) étant agencée dans la fente de guidage (2), laquelle lame rabote le bord usé (6) du balai d'essuie-glace (3) lorsque celui-ci est tiré à travers l'outil,
**caractérisé en ce que** l'outil (1) comporte au moins deux fentes de guidage (2) telles que la distance entre leurs baguettes de guidage (2a) d'une part et la ou les lames (4) associées d'autre part est différente et que la distance différente entre les baguettes de guidage (2a) d'une part et la ou les lames (4) associées d'autre part est présente sans manipulation de réglage sur l'outil.

2. Outil selon la revendication 1, **caractérisé en ce qu'**une lame (4) commune est prévue pour plusieurs fentes de guidage (2).

3. Outil selon la revendication 1, **caractérisé en ce que** les baguettes de guidage (2a) sont agencées à différents hauteurs par rapport au niveau de l'au moins une lame (4).

4. Outil selon la revendication 1, **caractérisé en ce que** plusieurs fentes de guidage (2) sont agencées les unes à côté des autres.

5. Outil selon la revendication 1, **caractérisé en ce que** les fentes de guidage (2) sont agencées audessous et/ou au-dessus de l'au moins une lame (4).

6. Outil selon la revendication 1, **caractérisé en ce que** l'au moins une lame (4) est logée réglable dans le sens de la longueur.

7. Outil selon la revendication 1, **caractérisé en ce que** la lame (4) peut être bloquée dans différentes positions en longueur de l'outil.

8. Outil selon la revendication 1, **caractérisé en ce que** l'au moins une lame (4) est montée sur un support (5) qui peut être enlevé de l'outil (1) avec la ou les lames (4).

9. Outil selon la revendication 1, **caractérisé en ce que** le support de lame (5) est logé dans un guide de coulissement de manière sensiblement transversale par rapport aux fentes de guidage (2) dans l'outil.

10. Outil selon la revendication 7, **caractérisé en ce que** le support de lame (5) est maintenu par une liaison rapide ou à enclenchement dans l'outil (1).

11. Outil selon la revendication 1, **caractérisé en ce que** l'au moins une lame (4) est agencée avec une certaine inclinaison par rapport au sens de la longueur des fentes de guidage (2) de telle sorte que son arête de coupe pénètre plus haut dans la fente de guidage (2) que le dos de la lame.

12. Outil selon la revendication 1, **caractérisé en ce que** les fentes de guidage (2) ont au moins derrière la ou les lames (4) une plus grande profondeur que celle qui correspond au balai d'essuie-glace.

13. Outil selon la revendication 1, **caractérisé en ce qu'**il est prévu à une extrémité des fentes de guidage (2) un repère qui indique la profondeur de coupe associée à la fente de guidage (2) respective.
